# EUROPÄISCHE PATENTSCHRIFT

(11) **EP 2 322 888 B1**
(45) Veröffentlichungstag und Bekanntmachung des Hinweises auf die Patenterteilung: **02.01.2019**
(21) Anmeldenummer: 10014301.5
(22) Anmeldetag: 04.11.2010
(51) Int. Cl.: F25J 3/04, C01B 23/00

(54) **Verfahren und Vorrichtung zur Gewinnung eines Helium-Neon-Konzentrats aus Luft**
Method and device for generating a helium-neon concentrate from air
Procédé et dispositif d'obtention d'un concentré d'hélium-néon à partir d'air

(30) Priorität: 13.11.2009 DE 102009053107; 04.12.2009 EP 09015028
(43) Veröffentlichungstag der Anmeldung: 18.05.2011
(73) Patentinhaber: Linde AG, 80331 München (DE)
(72) Erfinder: Eichelmann, Robert, 82024 Taufkirchen (DE); Rathbone, Thomas, Dr., KY1 3DD Kirkcaldy (GB); Lautenschlager, Tobias, 82194 Gröbenzell (DE)
(74) Vertreter: Imhof, Dietmar

(56) Entgegenhaltungen:
- JP-A- 9 110 406
- JP-A- 62 041 572
- US-A- 1 951 183
- BONDARENKO V ET AL: "WAVE CRYOGENERATORS APPLIED IN TECHNOLOGIES OF RARE GAS SEPARATION", INTERNATIONAL CONGRESS OF REFRIGERATION. PROCEEDINGS - CONGRESINTERNATIONAL DU FROID. COMPTES RENDUS, XX, XX, 21. August 2007 (2007-08-21), Seiten 1-8, XP001543123,
- DATABASE WPI Week 198126 Thomson Scientific, London, GB; AN 1981-47101D XP002589641, ALESEEV V P; DAVYDOV N I; POBEREZKIN A E: "METHOD OF CONCENTRATING NEONO-HELIUM MIXTURE", -& SU 585 728 A1 (ODESSA REFRIG IND RES) 23. März 1981 (1981-03-23)
- LEYAROVSKI E I ET AL: "CONTINUOUS PROCESS FOR THE SEPARATION OF NE-HE MIXTURES AT 80 K", CRYOGENICS, ELSEVIER, KIDLINGTON, GB LNKD- DOI:10.1016/0011-2275(88)90210-X, Bd. 28, Nr. 9, 1. September 1988 (1988-09-01), Seiten 599-604, XP000026398, ISSN: 0011-2275

## Beschreibung

Die Erfindung betrifft ein Verfahren und eine Vorrichtung zur Gewinnung eines Helium-Neon-Konzentrats aus Luft.

Ein derartiges Verfahren und eine entsprechende Vorrichtung sind aus JP S62041572 A bekannt, die hier als nächstliegender Stand der Technik angesehen wird.

Ein ähnliches Verfahren ist außerdem in Ullmann's Encyclopedia of Industrial Chemistry beschrieben (UEIC 2009/A-Z/N/Noble Gases, Abschnitt 4.1.1). Das dabei gewonnene Helium-Neon-Konzentrat wird üblicherweise nicht vor Ort weiter verarbeitet, sondern in Gasflaschen abgefüllt; ähnliche Prozesse sind aus JP 62041572 A, US 1951183 und SU 585728 bekannt. Anschließend wird das Helium-Neon-Konzentrat zu einer Spezialanlage zur Gewinnung eines praktisch reinen Helium-Neon-Gemischs oder von reinem Helium und/oder Neon gebracht, in der Helium-Neon-Konzentrate aus mehreren Luftzerlegungsanlagen in einem Prozess und einer Anlage weiter getrennt werden, der von den Prozessen und den Anlagen getrennt ist, in denen das Helium-Neon-Konzentrat gewonnen wird. Eine solche Spezialanlage ist beispielsweise in Bondarenko et al. "Wave Cryogenerators Applied in Technologies of Rare Gas Separation" International Congress of Refrigeration 2007, Beijing beschreiben.

Bei dem bekannten Verfahren wird das Helium-Neon-Konzentrat aus der Kopffraktion der Helium-Neon-Säule abgeleitet, indem die Kopffraktion in einem Kopfkondensator partiell kondensiert wird und das Helium-Neon-Konzentrat als gasförmig verbliebener Anteil aus dem Kopfkondensator der Helium-Neon-Säule abgezogen wird. Als flüssiger Kältemittelstrom, der in indirektem Wärmeaustausch mit der kondensierenden Kopffraktion im Kopfkondensator der Helium-Neon-Säule verdampft, wird dabei Flüssigstickstoff aus dem oberen Bereich einer Drucksäule des Destilliersäulen-Systems zur Stickstoff-Sauerstoff-Trennung eingesetzt. Im Verdampfungsraum des Kopfkondensators der Helium-Neon-Säule herrscht ein überatmosphärischer Druck von 1,1 bar oder höher, damit der im Verdampfungsraum verdampfte Stickstoff anschließend in die Niederdrucksäule eingeleitet werden kann; alternativ könnte der verdampfte Stickstoff über den Hauptwärmetauscher die Anlage verlassen. Der Druck im Verflüssigungsraum des Helium-Neon-Säulen-Kopfkondensators ist gleich dem Betriebsdruck der Helium-Neon-Säule, der wiederum etwa dem Betriebsdruck der Drucksäule des Destilliersäulen-Systems zur Stickstoff-Sauerstoff-Trennung entspricht, also bei 5 bis 6 bar liegt. Aufgrund dieser in der Grundstruktur des Verfahrens festgelegten Drücke kann in dem Helium-Neon-Säulen-Kopfkondensator maximal ein Neongehalt von etwa 50 mol-% und ein Heliumgehalt von maximal etwa 18 mol-% erreicht werden. Der Rest des Konzentrats besteht im Wesentlichen aus Stickstoff und enthält auch geringe Mengen an Argon. Die Konzentrierung könnte durch eine Verminderung der Betriebstemperatur des Helium-Neon-Säulen-Kopfkondensators verbessert werden; hierzu müsste allerdings der Verdampfungsraum bei einem unteratmosphärischen Druck betrieben und eine Vakuumpumpe zum Absaugen des dort gebildeten Dampfs eingesetzt werden.

Der Erfindung liegt die Aufgabe zugrunde, ein Verfahren der eingangs genannten Art und eine entsprechende Vorrichtung anzugeben, die auf andere Weise eine höhere Helium- und/oder Neonkonzentration ermöglichen.

Diese Aufgabe wird durch die Merkmale des Patentanspruchs 1 gelöst. Die partielle Kondensation des Vorproduktstroms wird dabei unter einem gegenüber dem Betriebsdruck der Helium-Neon-Säule erhöhten Druck durchgeführt. Hierdurch steigt der Helium- und Neon-Gehalt des gasförmig verbleibenden Anteils an, das Helium-Neon-Konzentrat ist stärker konzentriert und damit wertvoller. Mit dem erfindungsgemäßen Verfahren kann im Produktstrom ein Neongehalt von beispielsweise 60 bis 75 mol-%, vorzugsweise 70 bis 72 mol-% sowie ein Heliumgehalt von beispielsweise 15 bis 25 mol-%, vorzugsweise 18 bis 21 mol-% erreicht werden.

In dem aus dem UEIC-Artikel bekannten Verfahren wird der Produktstrom aus der Kopfgasfraktion der Helium-Neon-Säule abgeleitet, indem die gesamte Kopfgasfraktion in den Helium-Neon-Säulen-Kopfkondensator eingeleitet und partiell kondensiert wird, wobei der gesamte gasförmige Anteil den Produktstrom bildet. Durch den Begriff "Ableiten" im Patentanspruch 1 ist dieser Fall eingeschlossen. Er umfasst allgemein das Gewinnen eines zweiten Stroms aus einem ersten Strom mit oder ohne Zwischenschritte. Solche Zwischenschritte können beispielsweise in einem oder mehreren Kompressions- und/oder Partialkondensationsschritten bestehen. Sie können, müssen aber nicht die Helium-Neon-Konzentration erhöhen. Im Rahmen der Erfindung ist es grundsätzlich möglich, dass die gesamte Kopfgasfraktion als Vorproduktstrom der Druckerhöhung unterworfen wird. Vorteilhafter ist es, dies nur mit einem Teil des Kopfgasstroms zu tun, der insbesondere vorher aufkonzentriert wurde, zum Beispiel durch einen oder mehrere partielle Kondensationsschritte, also Auskondensieren der schwerer flüchtigen Bestandteile. Der Begriff "Ableiten" umfasst in dieser Anmeldung insbesondere ein- oder mehrstufige Konzentrierungsverfahren. Wird beispielsweise eine zweite Fraktion aus einer ersten Fraktion als gasförmiger Anteil eine partiellen Kondensation abgeleitet und aus der zweiten Fraktion auf analoge Weise eine dritte Fraktion, so ist in diesem Sinne die dritte Fraktion sowohl von der zweiten als auch von der ersten Fraktion "abgeleitet" worden. "Ableiten" umfasst jedoch auch das unmittelbare und vollständig Weiterleiten eines ersten Stroms als ein von diesem abgeleiteter zweiter Strom.

Das "Destilliersäulen-System zur Stickstoff-Sauerstoff-Trennung" der Erfindung kann als Ein-Säulen-System, als Zwei-Säulen-System oder auch als Drei- oder Mehr-Säulen-System ausgebildet sein. Am häufigsten wird ein Zwei-Säulen-System zum Einsatz kommen, wie es auch in UIEC 2009 gezeigt ist, nämlich ein klassisches Linde-Doppelsäulensystem. Ein solches Zwei-Säulen-System weist eine Drucksäule, eine Niederdrucksäule und einen Hauptkondensator auf, in dessen Verflüssigungsraum Kopfstickstoff aus der Drucksäule partiell kondensiert wird. Zusätzlich können weitere Vorrichtungen zur Gewinnung hochreiner Produkte und/oder anderer Luftkomponenten, insbesondere weiterer Edelgase vorgesehen sein, beispielsweise eine Argongewinnung und/oder eine Krypton-Xenon-Gewinnung.

Der "stickstoffreiche Strom aus dem Destilliersäulen-System zur Stickstoff-Sauerstoff-Trennung", der als Einsatz für die Helium-Neon-Säule dient, wird bei einem Zwei-Säulen-System vorzugsweise als Gasstrom aus dem Verflüssigungsraum des Hauptkondensators abgezogen.

Der "erste erhöhte Druck", unter dem der Vorproduktstrom partiell kondensiert wird, beträgt bei dem erfindungsgemäßen Verfahren beispielsweise 5 bis 32 bar, vorzugsweise 28 bis 31 bar. Der Betriebsdruck der Helium-Neon-Säule liegt im Bereich von beispielsweise 5 bis 8 bar, vorzugsweise 5,5 bis 6,5 bar.

Der Produktstrom kann stromabwärts der Phasentrennung auf einen zweiten erhöhten Druck verdichtet werden, der höher als der erste erhöhte Druck ist, zum Beispiel um das Helium-Neon-Konzentrat für den Transport zu konditionieren. Der "zweite erhöhte Druck" beträgt beispielsweise 100 bis 200 bar, vorzugsweise 150 bis 250 bar.

Hierbei ist es günstig, wenn mindestens ein Teil der Verdichtung des Vorproduktstroms auf den ersten Druck in der ersten Stufe eines mehrstufigen Helium-Neon-Verdichters vorgenommen wird und mindestens ein Teil der Verdichtung des Produktstroms auf den zweiten Druck in einer anderen Stufe des mehrstufigen Helium-Neon-Verdichters. Eine einzige Maschine kann also für beide Verdichtungsvorgänge eingesetzt werden. Vorzugsweise werden beide Verdichtungsvorgänge ausschließlich in dieser Maschine durchgeführt. Damit kann die erfindungsgemäße Verdichtung des ersten Vorproduktstroms in dem für die Verdichtung des Produktstroms ohnehin erforderlichen Helium-Neon-Verdichter durchgeführt werden; eine zusätzliche Maschine ist nicht erforderlich.

In einer besonders vorteilhaften Ausführungsform ist der Helium-Neon-Verdichter als Membranverdichter ausgebildet und weist insbesondere genau zwei Stufen auf. Im letzteren Fall wird in der ersten Stufe der Vorproduktstrom auf den ersten erhöhten Druck verdichtet, die zweite Stufe dient zur Kompression des Produktstroms auf den zweiten erhöhten Druck.

Die partielle Kondensation des Vorproduktstroms wird beispielsweise in indirektem Wärmeaustausch mit einem ersten flüssigen Kältemittelstrom durchgeführt, der bei dem indirekten Wärmeaustausch verdampft. Dieser erste flüssige Kältemittelstrom wird vorzugsweise durch Flüssigstickstoff gebildet und steht bei dem indirekten Wärmeaustausch unter einem überatmosphärischen Druck. Damit kann auf eine Vakuumpumpe zum Abziehen des aus dem flüssigen Kältemittelstrom gebildeten Dampfs verzichtet werden. Der Druck des ersten flüssigen Kältemittelstroms beim Verdampfen beträgt beispielsweise 1 bis 2 bar, vorzugsweise 1,0 bis 1,5 bar.

Es ist wirtschaftlich besonders günstig, wenn nur ein - vorher aufkonzentrierter - Teil der Kopfgasfraktion der Verdichtung auf den ersten erhöhten Druck zugeführt wird. Dazu wird die Kopffraktion unter dem Betriebsdruck der Helium-Neon-Säule partiell kondensiert, wobei mindestens ein Teil des bei der partiellen Kondensation gasförmig verbliebenen Anteils der Kopffraktion als helium- und neonreiche Fraktion abgezogen wird und der Vorproduktstrom aus der helium- und neonreichen Fraktion abgeleitet und anschließend der Verdichtung auf den ersten erhöhten Druck zugeführt wird. Diese partielle Kondensation kann in einem konventionellen Kopfkondensator der Helium-Neon-Säule durchgeführt werden, wobei der verflüssigte Anteil mindestens zum Teil als Rücklauf auf die Helium-Neon-Säule aufgegeben wird. In indirektem Wärmeaustausch mit der kondensierenden Kopffraktion wird vorzugsweise ein flüssiges Kältemedium verdampft, das insbesondere durch Flüssigstickstoff gebildet wird, unter einem Druck von beispielsweise 4,5 bis 6,5 bar, vorzugsweise 4,5 bis 5,5 bar steht und beispielsweise aus der Sumpfflüssigkeit der Helium-Neon-Säule abgeleitet wird.

Noch günstiger ist es, wenn zusätzlich die helium- und neonreiche Fraktion einer weiteren partiellen Kondensation unterworfen wird und der Vorproduktstrom aus dem gasförmig verbliebenen Anteil der helium- und neonreichen Fraktion abgeleitet und anschließend der Verdichtung auf den ersten erhöhten Druck zugeführt wird. Im Vergleich zu einer Verdichtung des gesamten Kopfgasstroms ist der apparative und energetische Aufwand wesentlich geringer; außerdem erhöht die partielle Kondensation der helium- und neonreichen Fraktion den Helium- und Neongehalt weiter.

In einer bevorzugten Ausführungsform werden die partielle Kondensation der helium-und neonreichen Fraktion und die partielle Kondensation des Vorproduktstroms in einem Helium-Neon-Kondensator durchgeführt, der als Kondensator-Verdampfer ausgebildet ist und einen Verdampfungsraum, einen ersten Verflüssigungsraum und einen zweiten Verflüssigungsraum aufweist. Die helium- und neonreiche Fraktion wird dabei in den ersten Verflüssigungsraum, der Vorproduktstrom in den zweiten Verflüssigungsraum und der erste flüssige Kältemittelstrom in den Verdampfungsraum des Helium-Neon-Kondensators eingeführt. Mit Hilfe dieses integrierten Helium-Neon-Kondensators können zwei Kondensationsschritte in einem einzigen Wärmetauscher und mit einem einzigen Kältemittelstrom durchgeführt werden.

Der Helium-Neon-Kondensator kann am Kopf der Helium-Neon-Säule angeordnet sein. Dabei kann ein gemeinsamer Behälter den Helium-Neon-Kondensator und die Helium-Neon-Säule umschließen. Alternativ dazu kann der Helium-Neon-Kondensator in einem von der Helium-Neon-Säule getrennten Behälter angeordnet sein. Dann ist seine Positionierung grundsätzlich unabhängig von derjenigen der Helium-Neon-Säule.

Jeder der drei erwähnten Kondensationsschritte kann zur Erzeugung von flüssigem Rücklauf für die Helium-Neon-Säule verwendet werden, indem der entsprechende verflüssigte Anteil mindestens zum Teil in die Helium-Neon-Säule eingeleitet wird. Insbesondere wird mindestens ein Teil des bei der partiellen Kondensation des Vorproduktstroms verflüssigten Anteils aus der Phasentrennung abgezogen und als Rücklauf in die Helium-Neon-Säule eingeleitet. Alternativ oder zusätzlich wird mindestens ein Teil des bei der partiellen Kondensation der helium- und neonreichen Fraktion verflüssigten Anteils aus der Phasentrennung abgezogen und als Rücklauf in die Helium-Neon-Säule eingeleitet. Das in dem jeweiligen kondensierten Anteil noch enthaltene Helium und Neon wird damit in den Prozess zurückgeleitet.

Grundsätzlich kann die Verdichtung des Vorproduktstroms auf den ersten Druck im Kalten vorgenommen werden. Allerdings müsste dabei die Verdichtungswärme mit teurem Flüssigstickstoff abgeführt werden. Deshalb ist es günstiger, wenn der Vorproduktstrom stromaufwärts der Verdichtung auf den ersten Druck angewärmt und stromabwärts der Verdichtung auf den ersten Druck abgekühlt wird, vorzugsweise in indirektem Wärmeaustausch mit dem anzuwärmenden Vorproduktstrom. Die Druckerhöhung kann damit im Warmen durchgeführt und die Verdichtungswärme mit üblichen Kühlmitteln wie zum Beispiel Kühlwasser abgeführt werden.

Der erste erhöhte Druck (also der Betriebsdruck des zweiten Verflüssigungsraums des Helium-Neon-Kondensators) beträgt mindestens 4,5 bar und liegt insbesondere zwischen 20 und 40 bar; vorzugsweise beträgt er 28 bis 31 bar.

Die Erfindung betrifft außerdem eine Vorrichtung zur Gewinnung eines Helium-Neon-Konzentrats aus Luft gemäß den Patentansprüchen 13 bis 16.

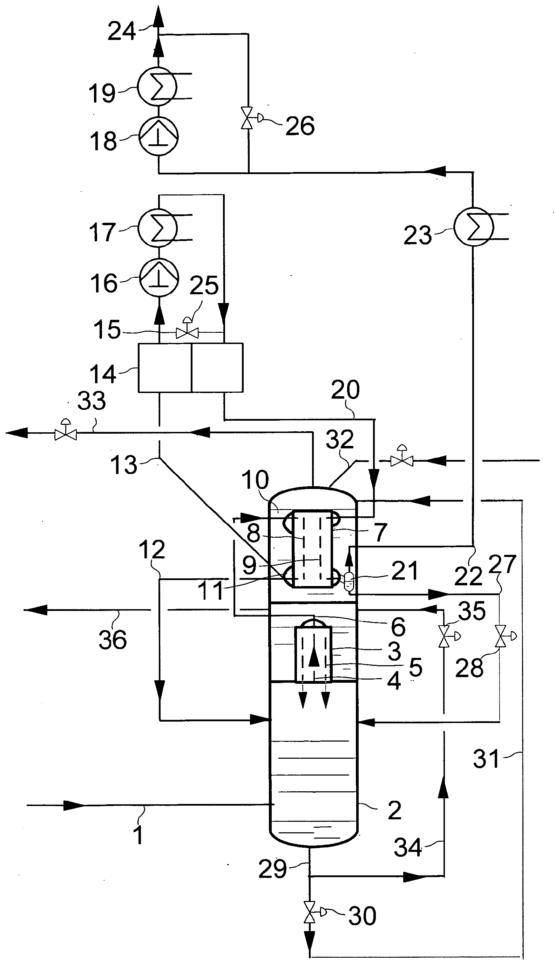

Die Erfindung sowie weitere Einzelheiten der Erfindung werden im Folgenden anhand eines in der Zeichnung schematisch dargestellten Ausführungsbeispiels näher erläutert.

Das Destilliersäulen-System zur Stickstoff-Sauerstoff-Trennung ist in der Zeichnung nicht dargestellt. Es weist eine Drucksäule, eine Niederdrucksäule und einen Hauptkondensator auf und kann beispielsweise als klassisches Linde-Doppelsäulensystem ausgebildet sein, wie es in dem oben genannten UEIC-Artikel gezeigt ist. Aus dem Verflüssigungsraum des Hauptkondensators wird ein "stickstoffreicher Strom" 1, der auch Helium und Neon enthält, gasförmig abgezogen und in eine Helium-Neon-Säule 2 eingeleitet, deren Betriebsdruck am Kopf etwa 5,6 bar beträgt.

Die Helium-Neon-Säule 2 weist einen Kopfkondensator 3 auf, der als Kondensator-Verdampfer ausgebildet ist und einen Verflüssigungsraum und einen Verdampfungsraum aufweist. Eine Kopffraktion 4 der Helium-Neon-Säule wird in den Verflüssigungsraum des Kopfkondensators 3 eingeleitet, der in dem Ausführungsbeispiel als Rücklaufkondensator ausgebildet ist und dort partiell kondensiert. Die dabei gebildete Flüssigkeit 5 strömt zurück in die Helium-Neon-Säule 2 und wird damit als Rücklauf auf die Säule aufgegeben. Der gasförmig verbliebene Anteil wird als helium- und neonreiche Fraktion 6 mit einem Neongehalt von 4,8 mol-% aus dem Verflüssigungsraum des Kopfkondensators 3 entnommen. Bei einem klassischen Verfahren zur Helium-Neon-Gewinnung aus Luft würde die helium- und neonreiche Fraktion 6 als Produktstrom (Helium-Neon-Konzentrat) abgezogen; allerdings würde dabei der Verdampfungsraum bei etwa atmosphärischem Druck betrieben.

In dem hier dargestellten Verfahren wird die helium- und neonreiche Fraktion 6 jedoch weiter behandelt und dabei zunächst einem Helium-Neon-Kondensator 7 zugeleitet. Dieser weist in dem Ausführungsbeispiel zwei Verflüssigungsräume 8 und 9 sowie einen Verdampfungsraum 10 auf. In dem ersten Verflüssigungsraum 8 des Helium-Neon-Kondensators 7 wird die helium- und neonreiche Fraktion partiell kondensiert. Die partiell kondensierte Fraktion wird einer Phasentrennung in einem Header 11 unterworfen. Der verflüssigte Anteil 12 wird als Rücklauf auf den Kopf der Helium-Neon-Säule 2 aufgegeben. Der gasförmige verbliebene Anteil weist einen Neongehalt von 54 mol-% auf, wird als Vorproduktstrom 13 abgezogen und in einem Wärmetauscher 14 auf etwa Umgebungstemperatur angewärmt. Der warme Vorproduktstrom 15 wird der ersten Stufe 16 eines Helium-Neon-Verdichters zugeführt und dort auf einen ersten erhöhten Druck von 30 bar verdichtet. Der Helium-Neon-Verdichter ist als zweistufiger Membranverdichter (16, 18) ausgebildet. Nach Durchströmen eines Nachkühlers 17 und Abkühlung im Wärmetauscher 14 wird der Vorproduktstrom 20 unter dem erstem Druck in den zweiten Verflüssigungsraum 9 des Helium-Neon-Kondensators 7 eingeleitet und dort partiell kondensiert. Der partiell kondensierte Vorproduktstrom wird in einen Abscheider (Phasentrenner) 21 eingeleitet und dort einer Phasentrennung unterworfen. Der gesamte bei der partiellen Kondensation 9 gasförmig verbliebene Anteil des Vorproduktstroms 20 wird als Produktstrom 22 aus der Phasentrennung 21 abgezogen. Der Produktstrom 22 weist einen Neongehalt von etwa 70 mol-% auf, wird angewärmt (23), auf einen zweiten erhöhten Druck von 200 bar verdichtet, einer Nachkühlung 19 unterworfen und schließlich als Helium-Neon-Konzentrat 24 gewonnen. Die Verdichtung auf den zweiten erhöhten Druck erfolgt in der zweiten Stufe 18 des Helium-Neon-Verdichters.

Die beiden Verdichterstufen 16, 18 werden mittels je eines Bypassleitung mit Regelventil 25, 26 geregelt.

Der Verdampfungsraum 10 des Helium-Neon-Kondensators 7 wird unter Umgebungsdruck betrieben (etwa 1,0 bar). Als flüssiger Kältemittelstrom wird ein Teil 31 der Sumpfflüssigkeit 29 der Helium-Neon-Säule 2 eingesetzt, der zuvor in einem Ventil 30 entsprechend entspannt wurde. Alternativ oder zusätzlich kann flüssiger Stickstoff 32 aus einer externen Quelle (zum Beispiel einem Flüssigtank) als flüssiger Kältemittelstrom eingesetzt werden. Der im Verdampfungsraum 10 verdampfte Kältemittelstrom 33 wird in die Atmosphäre abgeblasen. Der Kältemittelstrom 33 kann auch ins Restgas oder in den Niederdruckstickstoff eingeleitet werden, je nach zur Verfügung stehendem Überdruck.

Wegen der sehr niedrigen Temperatur im Helium-Neon-Kondensator 7 ist es günstig, wenn der Abscheider 21 im Flüssigkeitsbad des Verdampfungsraums 10 des Helium-Neon-Kondensators 7 angeordnet ist. Dadurch wird jeglicher Wärmeeintrag verhindert, der zu einer Rückverdampfung und damit zu einer Verdünnung des Produktstroms führen würde.

Die Flüssigphase 27 aus dem Abscheider 21 wird in einem Drosselventil 28 auf den Betriebsdruck der Helium-Neon-Säule 2 entspannt und als Rücklauf auf den Kopf der Säule aufgegeben.

Der Verdampfungsraum des Helium-Neon-Säulen-Kopfkondensators 3 wird mit dem Rest 34 der Sumpfflüssigkeit 29 der Helium-Neon-Säule 2 beschickt. Das Ventil 35 dient zur Einstellung des Flüssigkeitsstands. Der im Verdampfungsraum des Helium-Neon-Säulen-Kopfkondensators 3 gebildete Dampf 36 wird zum Destilliersäulen-System zur Stickstoff-Sauerstoff-Trennung zurückgeleitet beziehungsweise als Mitteldruck-Stickstoffprodukt dem Hauptwärmetauscher zugeführt und dort gegen die Einsatzluft für das Destilliersäulen-System zur Stickstoff-Sauerstoff-Trennung angewärmt.

## Patentansprüche

1. Verfahren zur Gewinnung eines Helium-Neon-Konzentrats aus Luft in einer Luftzerlegungsanlage, die ein Destilliersäulen-System zur Stickstoff-Sauerstoff-Trennung mit mindestens einer ersten Trennsäule und eine Helium-Neon-Säule (2) aufweist, wobei
- Einsatzluft in das Destilliersäulen-System zur Stickstoff-Sauerstoff-Trennung eingeleitet wird,
- ein stickstoffreicher Strom (1) aus dem Destilliersäulen-System zur Stickstoff-Sauerstoff-Trennung der Helium-Neon-Säule (2) zugeleitet wird,
- eine Kopffraktion (4) aus dem oberen Bereich der Helium-Neon-Säule (2) entnommen wird und
- aus der Kopffraktion (4) ein Produktstrom (22) abgeleitet wird, der als Helium-Neon-Konzentrat (24) gewonnen wird,
- aus der Kopffraktion (4) ein Vorproduktstrom (13, 15) abgeleitet wird,
- der Vorproduktstrom (15) auf einen ersten erhöhten Druck verdichtet (16) wird, der höher als der Betriebsdruck der Helium-Neon-Säule (2) ist,
- der Vorproduktstrom (20) unter dem ersten erhöhten Druck partiell kondensiert (9) und anschließend einer Phasentrennung (21) unterworfen wird,
- mindestens ein Teil des bei der partiellen Kondensation gasförmig verbliebenen Anteils des Vorproduktstroms als Produktstrom (22) aus der Phasentrennung (21) abgezogen und schließlich als Helium-Neon-Konzentrat (24) gewonnen wird, und
- mindestens ein Teil des bei der partiellen Kondensation (9) des Vorproduktstroms (20) verflüssigten Anteils (27) aus der Phasentrennung (21) abgezogen und als Rücklauf in die Helium-Neon-Säule (2) eingeleitet wird.

2. Verfahren nach Anspruch 1, **dadurch gekennzeichnet, dass** der Produktstrom (22) stromabwärts der Phasentrennung auf einen zweiten erhöhten Druck verdichtet (18) wird, der höher als der erste erhöhte Druck ist.

3. Verfahren nach Anspruch 2, **dadurch gekennzeichnet, dass** mindestens ein Teil der Verdichtung des Vorproduktstroms (15) auf den ersten Druck in der ersten Stufe (16) eines mehrstufigen Helium-Neon-Verdichters vorgenommen wird und mindestens ein Teil der Verdichtung des Produktstroms (22) auf den zweiten Druck in einer anderen Stufe (18) des mehrstufigen Helium-Neon-Verdichters vorgenommen wird.

4. Verfahren nach Anspruch 3, **dadurch gekennzeichnet, dass** der Helium-Neon-Verdichter als Membranverdichter ausgebildet ist und insbesondere genau zwei Stufen (16, 18) aufweist.

5. Verfahren nach einem der Ansprüche 1 bis 4, **dadurch gekennzeichnet, dass** die partielle Kondensation (9) des Vorproduktstroms (20) in indirektem Wärmeaustausch (7) mit einem ersten flüssigen Kältemittelstrom (31, 32) durchgeführt wird, der bei dem indirekten Wärmeaustausch (7) verdampft.

6. Verfahren nach Anspruch 5, **dadurch gekennzeichnet, dass** der erste flüssige Kältemittelstrom (31, 32) durch Flüssigstickstoff gebildet wird und bei dem indirekten Wärmeaustausch (7) unter einem überatmosphärischen Druck steht.

7. Verfahren nach einem der Ansprüche 1 bis 6, **dadurch gekennzeichnet, dass** die Kopffraktion (4) unter dem Betriebsdruck der Helium-Neon-Säule (2) partiell kondensiert (3) wird, mindestens ein Teil des bei der partiellen Kondensation gasförmig verbliebenen Anteils der Kopffraktion (4) als helium- und neonreiche Fraktion (6) abgezogen wird und der Vorproduktstrom (13, 15) aus der helium- und neonreichen Fraktion (6) abgeleitet und anschließend der Verdichtung (16) auf den ersten erhöhten Druck zugeführt wird.

8. Verfahren nach Anspruch 7, **dadurch gekennzeichnet, dass** die helium- und neonreiche Fraktion (6) einer weiteren partiellen Kondensation (8) unterworfen wird und der Vorproduktstrom (13, 15) aus dem gasförmig verbliebenen Anteil der helium- und neonreichen Fraktion (6) abgeleitet und anschließend der Verdichtung (16) auf den ersten erhöhten Druck zugeführt wird.

9. Verfahren nach den Ansprüchen 5 und 8, **dadurch gekennzeichnet, dass** die partielle Kondensation der helium- und neonreichen Fraktion und die partielle Kondensation des Vorproduktstroms in einem Helium-Neon-Kondensator (7) durchgeführt werden, der als Kondensator-Verdampfer ausgebildet ist und einen Verdampfungsraum (10), einen ersten Verflüssigungsraum (8) und einen zweiten Verflüssigungsraum (9) aufweist, wobei die helium-und neonreiche Fraktion (6) in den ersten Verflüssigungsraum (8), der Vorproduktstrom (20) in den zweiten Verflüssigungsraum (9) und der erste flüssige Kältemittelstrom (31, 32) in den Verdampfungsraum (10) des Helium-Neon-Kondensators (7) eingeführt werden.

10. Verfahren nach einem der Ansprüche 8 oder 9, **dadurch gekennzeichnet, dass** mindestens ein Teil des bei der partiellen Kondensation (8) der helium- und neonreichen Fraktion (6) verflüssigten Anteils (12) aus der Phasentrennung (21) abgezogen und als Rücklauf in die Helium-Neon-Säule (2) eingeleitet wird.

11. Verfahren nach einem der Ansprüche 1 bis 10, **dadurch gekennzeichnet, dass** der Vorproduktstrom (13, 15) stromaufwärts der Verdichtung (16) auf den ersten Druck angewärmt und stromabwärts der Verdichtung (16) auf den ersten Druck abgekühlt wird, vorzugsweise in indirektem Wärmeaustausch (14) mit dem anzuwärmenden Vorproduktstrom (13).

12. Verfahren nach einem der Ansprüche 1 bis 11, **dadurch gekennzeichnet, dass** der erste erhöhte Druck mindestens 4,5 bar beträgt und insbesondere zwischen 20 und 40 bar liegt.

13. Vorrichtung zur Gewinnung eines Helium-Neon-Konzentrats aus Luft mit
- einem Destilliersäulen-System zur Stickstoff-Sauerstoff-Trennung mit mindestens einer ersten Trennsäule,
- einer Helium-Neon-Säule (2),
- Mitteln zum Einleiten von Einsatzluft in das Destilliersäulen-System zur Stickstoff-Sauerstoff-Trennung,
- Mitteln zum Einleiten eines stickstoffreichen Stroms (1) aus dem Destilliersäulen-System zur Stickstoff-Sauerstoff-Trennung in die Helium-Neon-Säule (2),
- Mitteln zum Entnehmen einer Kopffraktion (4) aus dem oberen Bereich der Helium-Neon-Säule (2),
- Mitteln zum Ableiten eines Produktstroms aus der Kopffraktion (4),
- Mitteln zum Abziehen des Produktstroms (22) abgeleitet Helium-Neon-Konzentrat (24),
- Mitteln zum Ableiten eines Vorproduktstrom (13, 15) aus der Kopffraktion (4),
- Mitteln zum Verdichten des Vorproduktstroms (15) auf einen ersten erhöhten Druck, der höher als der Betriebsdruck der Helium-Neon-Säule (2) ist,
- Mitteln zur partiellen Kondensieren (9) der Vorproduktstrom (20) unter dem ersten erhöhten Druck,
- Mitteln zur Phasentrennung (21) des partiell kondensierten Vorproduktstroms,
- Mitteln zum Abziehen mindestens eines Teils des bei der partiellen Kondensation gasförmig verbliebenen Anteils des Vorproduktstroms als Produktstrom (22) und als Helium-Neon-Konzentrat (24) und mit
- Mitteln zum Einleiten mindestens eines Teils des bei der partiellen Kondensation (9) des Vorproduktstroms (20) verflüssigten Anteils (27) aus der Phasentrennung (21) als Rücklauf in die Helium-Neon-Säule (2).

14. Vorrichtung nach Anspruch 13, **gekennzeichnet durch** einen mehrstufigen Helium-Neon-Verdichter, dessen erster Stufe (16) zur Durchführung mindestens eines Teils der Verdichtung des Vorproduktstroms (15) auf den ersten Druck eingerichtet ist, wobei andere Stufe (18) des mehrstufigen Helium-Neon-Verdichters so eingerichtet ist, dass in ihr mindestens der Produktstroms (22) auf einen zweiten Druck verdichtet wird.

15. Vorrichtung nach Anspruch 13 oder 14, **dadurch gekennzeichnet, dass** der Helium-Neon-Verdichter als Membranverdichter ausgebildet ist und insbesondere genau zwei Stufen (16, 18) aufweist.

16. Vorrichtung nach einem der Ansprüche 13 bis 15, **gekennzeichnet durch**
- Mittel zum Durchführen der partiellen Kondensation (9) des Vorproduktstroms (20) in indirektem Wärmeaustausch (7) mit einem ersten flüssigen Kältemittelstrom (31, 32), der bei dem indirekten Wärmeaustausch (7) verdampft,
- Mittel zum partiellen Kondensieren (3) der Kopffraktion (4) unter dem Betriebsdruck der Helium-Neon-Säule (2),
- Mittel zum Abziehen mindestens eines Teils des bei der partiellen Kondensation gasförmig verbliebenen Anteils der Kopffraktion (4) als helium- und neonreiche Fraktion (6),
- Mittel zum Unterwerfen der helium- und neonreichen Fraktion (6) einer weiteren partiellen Kondensation (8),
- Mittel zum Ableiten des Vorproduktstrom (13, 15) aus dem gasförmig verbliebenen Anteil der helium- und neonreichen Fraktion (6),
- Mittel zum Zuführen des Vorproduktstroms zu der Verdichtung (16) auf den ersten erhöhten Druck,
- wobei die Mittel zur partiellen Kondensation der helium- und neonreichen Fraktion und die Mittel zur partiellen Kondensation des Vorproduktstroms durch einen Helium-Neon-Kondensator (7) gebildet werden, der als Kondensator-Verdampfer ausgebildet ist und einen Verdampfungsraum (10), einen ersten Verflüssigungsraum (8) und einen zweiten Verflüssigungsraum (9) aufweist, und durch
- Mittel zum Einführen der helium- und neonreichen Fraktion (6) in den ersten Verflüssigungsraum (8), zum Einführen des Vorproduktstroms (20) in den zweiten Verflüssigungsraum (9) und zum Einführen des ersten flüssigen Kältemittelstroms (31, 32) in den Verdampfungsraum (10) des Helium-Neon-Kondensators (7).

## Claims

1. Method for generating a helium-neon concentrate from air in an air fractionation plant which comprises a distillation column system for nitrogen-oxygen separation having at least one first separation column and a helium-neon column (2), wherein
- feed air is introduced into the distillation column system for nitrogen-oxygen separation,
- a nitrogen-rich stream (1) from the distillation column system for nitrogen-oxygen separation is passed to the helium-neon column (2),
- an overhead fraction (4) is taken off from the upper region of the helium-neon column (2) and
- a product stream (22) is derived from the overhead fraction (4), which product stream is obtained as helium-neon concentrate (24),
- a preproduct stream (13, 15) is derived from the overhead fraction (4),
- the preproduct stream (15) is compressed (16) to a first elevated pressure which is higher than the operating pressure of the helium-neon column (2),
- the preproduct stream (20) at the first elevated pressure is partially condensed (9) and then subjected to a phase separation (21),
- at least some of the portion of the preproduct stream remaining in the gaseous state in the partial condensation is taken off from the phase separation (21) as product stream (22) and is finally obtained as helium-neon concentrate (24), and
- at least a part of the portion (27) liquefied in the partial condensation (9) of the preproduct stream (20) is taken off from the phase separation (21) and introduced as reflux into the helium-neon column (2).

2. Method according to Claim 1, **characterized in that** the product stream (22) is compressed (18) downstream of the phase separation to a second elevated pressure which is higher than the first elevated pressure.

3. Method according to Claim 2, **characterized in that** at least a part of the compression of the preproduct stream (15) to the first pressure is performed in the first stage (16) of a multistage helium-neon compressor and at least a part of the compression of the product stream (22) to the second pressure is performed in another stage (18) of the multistage helium-neon compressor.

4. Method according to Claim 3, **characterized in that** the helium-neon compressor is constructed as a diaphragm compressor and comprises, in particular, exactly two stages (16, 18).

5. Method according to any one of Claims 1 to 4, **characterized in that** the partial condensation (9) of the preproduct stream (20) is carried out in indirect heat exchange (7) with a first liquid coolant stream (31, 32) which vaporizes in the indirect heat exchange (7).

6. Method according to Claim 5, **characterized in that** the first liquid coolant stream (31, 32) is formed by liquid nitrogen and remains at a superatmospheric pressure in the indirect heat exchange (7).

7. Method according to any one of Claims 1 to 6, **characterized in that** the overhead fraction (4) is partially condensed (3) at the operating pressure of the helium-neon column (2), at least a part of the portion of the overhead fraction (4) remaining in the gaseous state in the partial condensation is taken off as helium- and neon-rich fraction (6) and the preproduct stream (13, 15) is derived from the helium- and neon-rich fraction (6) and is then fed to the compression (16) to the first elevated pressure.

8. Method according to Claim 7, **characterized in that** the helium- and neon-rich fraction (6) is subjected to a further partial condensation (8) and the preproduct stream (13, 15) is derived from the portion of the helium- and neon-rich fraction (6) remaining in the gaseous state and is then fed to the compression (16) to the first elevated pressure.

9. Method according to Claims 5 and 8, **characterized in that** the partial condensation of the helium- and neon-rich fraction and the partial condensation of the preproduct stream are carried out in a helium-neon condenser (7) which is constructed as a condenser-evaporator and comprises an evaporation space (10), a first liquefaction space (8) and a second liquefaction space (9), wherein the helium- and neon-rich fraction (6) is introduced into the first liquefaction space (8), the preproduct stream (20) is introduced into the second liquefaction space (9) and the first liquid coolant stream (31, 32) is introduced into the evaporation space (10) of the helium-neon condenser (7).

10. Method according to either of Claims 8 or 9, **characterized in that** at least a part of the portion (12) liquefied in the partial condensation (8) of the helium- and neon-rich fraction (6) is taken off from the phase separation (21) and introduced as reflux into the helium-neon column (2) .

11. Method according to any one of Claims 1 to 10, **characterized in that** the preproduct stream (13, 15) is warmed upstream of the compression (16) to the first pressure and cooled downstream of the compression (16) to the first pressure, preferably in indirect heat exchange (14) with the preproduct stream (13) that is to be warmed.

12. Method according to any one of Claims 1 to 12, **characterized in that** the first elevated pressure is at least 4.5 bar and is in particular between 20 and 40 bar.

13. Device for generating a helium-neon concentrate from air having
- a distillation column system for nitrogen-oxygen separation having at least one first separation column,
- a helium-neon column (2),
- means for introducing feed air into the distillation column system for nitrogen-oxygen separation,
- means for introducing a nitrogen-rich stream (1) from the distillation column system for nitrogen-oxygen separation into the helium-neon column (2),
- means for taking off an overhead fraction (4) from the upper region of the helium-neon column (2),
- means for deriving a product stream from the overhead fraction (4),
- means for taking off the helium-neon concentrate (24) derived from the product stream (22),
- means for deriving a preproduct stream (13, 15) from the overhead fraction (4),
- means for compressing the preproduct stream (15) to a first elevated pressure which is higher than the operating pressure of the helium-neon column (2),
- means for the partial condensation (9) of the preproduct stream (20) at the first elevated pressure,
- means for phase separation (21) of the partially condensed preproduct stream,
- means for taking off at least a part of the portion of the preproduct stream remaining in the gaseous state in the partial condensation as product stream (22) and as helium-neon concentrate (24), and having
- means for introducing at least a part of the portion (27) liquefied in the partial condensation (9) of the preproduct stream (20) from the phase separation (21) as reflux into the helium-neon column (2).

14. Device according to Claim 13, **characterized by** a multistage helium-neon compressor, the first stage (16) of which is configured for carrying out at least a part of the compression of the preproduct stream (15) to the first pressure, wherein another stage (18) of the multistage helium-neon compressor is configured in such a manner that, therein, at least the product stream (22) is compressed to a second pressure.

15. Device according to Claim 13 or 14, **characterized in that** the helium-neon compressor is constructed as a diaphragm compressor and comprises, in particular, exactly two stages (16, 18).

16. Device according to any one of Claims 13 to 15, **characterized by**
- means for carrying out the partial condensation (9) of the preproduct stream (20) in indirect heat exchange (7) with a first liquid coolant stream (31, 32) which evaporates in the indirect heat exchange (7),
- means for the partial condensation (3) of the overhead fraction (4) at the operating pressure of the helium-neon column,
- means for taking off at least a part of the portion of the overhead fraction (4) remaining in the gaseous state in the partial condensation as helium- and neon-rich fraction (6),
- means for subjecting the helium- and neon-rich fraction (6) to a further partial condensation,
- means for deriving the preproduct stream (13, 15) from the portion of the helium- and neon-rich fraction (6) that has remained in the gaseous state,
- means for feeding the preproduct stream to compression (16) to the first elevated pressure,
- wherein the means for the partial condensation of the helium- and neon-rich fraction and the means for the partial condensation of the preproduct stream are formed by a helium-neon condenser (7) which is constructed as a condenser-evaporator and has an evaporation space (10), a first liquefaction space (8) and a second liquefaction space (9), and by
- means for the introduction of the helium- and neon-rich fraction (6) into the first liquefaction space (8), for the introduction of the preproduct stream (20) into the second liquefaction space (9), and for the introduction of the first liquid coolant stream (31, 32) into the evaporation space (10) of the helium-neon condenser (7).

## Revendications

1. Procédé pour l'obtention d'un concentré d'hélium-néon à partir d'air dans une installation de séparation de l'air, qui présente un système de colonnes de distillation pour la séparation d'azote et d'oxygène avec au moins une première colonne de séparation et une colonne hélium-néon (2), dans lequel
- de l'air de charge est introduit dans le système de colonnes de distillation pour la séparation d'azote-oxygène,
- un courant riche en azote (1) provenant du système de colonnes de distillation pour la séparation d'azote-oxygène est envoyé à la colonne hélium-néon (2),
- une fraction de tête (4) est prélevée hors de la région supérieure de la colonne hélium-néon (2), et
- un courant de produit (22), qui est obtenu comme concentré d'hélium-néon (24) est extrait de la fraction de tête (4),
- un courant de précurseur (13, 15) est extrait de la fraction de tête (4),
- le courant de précurseur (15) est comprimé à une première pression accrue (16), qui est plus élevée que la pression de fonctionnement de la colonne hélium-néon (2),
- le courant de précurseur (20) est condensé partiellement (9) sous la première pression accrue et est ensuite soumis à une séparation de phases (21),
- au moins une partie de la part du courant de précurseur restée à l'état gazeux lors de la condensation partielle est soutirée comme courant de produit (22) à partir de la séparation de phases (21) et est finalement obtenue comme concentré d'hélium-néon (24), et
- au moins une partie de la part (27) liquéfiée lors de la condensation partielle (9) du courant de précurseur (20) est soutirée à partir de la séparation de phases (21) et est introduite comme courant de retour dans la colonne hélium-néon (2).

2. Procédé selon la revendication 1, **caractérisé en ce que** le courant de produit (22) est comprimé en aval de la séparation de phases à une deuxième pression accrue (18), qui est plus élevée que la première pression accrue.

3. Procédé selon la revendication 2, **caractérisé en ce que** au moins une partie de la compression du courant de précurseur (15) est effectuée à la première pression dans le premier étage (16) d'un compresseur hélium-néon à plusieurs étages et au moins une partie de la compression du courant de produit (22) est effectuée à la deuxième pression dans un autre étage (18) du compresseur hélium-néon à plusieurs étages.

4. Procédé selon la revendication 3, **caractérisé en ce que** le compresseur hélium-néon est réalisé sous la forme d'un compresseur à membrane et présente en particulier exactement deux étages (16, 18).

5. Procédé selon l'une quelconque des revendications 1 à 4, **caractérisé en ce que** la condensation partielle (9) du courant de précurseur (20) est réalisée en échange de chaleur indirect (7) avec un premier courant d'agent de refroidissement liquide (31, 32), qui se vaporise lors de l'échange de chaleur indirect (7).

6. Procédé selon la revendication 5, **caractérisé en ce que** le premier courant d'agent de refroidissement liquide (31, 32) est formé par de l'azote liquide et se trouve à une pression supra-atmosphérique lors de l'échange de chaleur indirect (7).

7. Procédé selon l'une quelconque des revendications 1 à 6, **caractérisé en ce que** la fraction de tête (4) est partiellement condensée (3) sous la pression de fonctionnement de la colonne hélium-néon (2), au moins une partie de la part de la fraction de tête (4) restée sous forme gazeuse lors de la condensation partielle est soutirée sous la forme d'une fraction riche en hélium et en néon (6) et le courant de précurseur (13, 15) est extrait hors de la fraction riche en hélium et en néon (6) et est ensuite envoyé à la compression (16) à la première pression accrue.

8. Procédé selon la revendication 7, **caractérisé en ce que** la fraction riche en hélium et en néon (6) est soumise à une autre condensation partielle (8) et le courant de précurseur (13, 15) est extrait hors de la part de la fraction riche en hélium et en néon (6) restée sous forme gazeuse et est ensuite envoyé à la compression (16) à la première pression accrue.

9. Procédé selon les revendications 5 et 8, **caractérisé en ce que** l'on réalise la condensation partielle de la fraction riche en hélium et en néon et la condensation partielle du courant de précurseur dans un condenseur hélium-néon (7), qui est réalisé sous la forme d'un condenseur-évaporateur et présente une chambre d'évaporation (10), une première chambre de liquéfaction (8) et une deuxième chambre de liquéfaction (9), dans lequel la fraction riche en hélium et en néon (6) est introduite dans la première chambre de liquéfaction (8), le courant de précurseur (20) est introduit dans la deuxième chambre de liquéfaction (9) et le premier courant d'agent de refroidissement liquide (31, 32) dans la chambre d'évaporation (10) du condenseur hélium-néon (7) .

10. Procédé selon une des revendications 8 ou 9, **caractérisé en ce que** au moins une partie de la part (12) liquéfiée lors de la condensation partielle (8) de la fraction riche en hélium et en néon (6) est soutirée hors de la séparation de phases (21) et est introduite comme courant de retour dans la colonne hélium-néon (2).

11. Procédé selon l'une quelconque des revendications 1 à 10, **caractérisé en ce que** l'on échauffe le courant de précurseur (13, 15) en amont de la compression (16) à la première pression et on le refroidit en aval de la compression (16) à la première pression, de préférence en échange de chaleur indirect (14) avec le courant de précurseur à échauffer (13).

12. Procédé selon l'une quelconque des revendications 1 à 11, **caractérisé en ce que** la première pression accrue vaut au moins 4,5 bars et se situe en particulier entre 20 et 40 bars.

13. Dispositif pour l'obtention d'un concentré d'hélium-néon à partir d'air, avec
- un système de colonnes de distillation pour la séparation d'azote et d'oxygène avec au moins une première colonne de séparation,
- une colonne hélium-néon (2),
- des moyens pour introduire de l'air de charge dans le système de colonnes de distillation pour la séparation d'azote et d'oxygène,
- des moyens pour introduire un courant riche en azote (1) provenant du système de colonnes de distillation pour la séparation d'azote et d'oxygène dans la colonne hélium-néon (2),
- des moyens pour prélever une fraction de tête (4) hors de la région supérieure de la colonne hélium-néon (2),
- des moyens pour extraire un courant de produit hors de la fraction de tête (4),
- des moyens pour soutirer le courant de produit (22) extrait sous forme de concentré d'hélium-néon (24),
- des moyens pour soutirer un courant de précurseur (13, 15) hors de la fraction de tête (4),
- des moyens pour comprimer le courant de précurseur (15) à une première pression accrue, qui est plus élevée que la pression de fonctionnement de la colonne hélium-néon (2),
- des moyens pour condenser partiellement (9) le courant de précurseur (20) sous la première pression accrue,
- des moyens pour la séparation de phases (21) du courant de précurseur partiellement condensé,
- des moyens pour extraire au moins une partie de la part du courant de précurseur restée sous forme gazeuse lors de la condensation partielle sous forme de courant de produit (22) et de concentré d'hélium-néon (24), et avec
- des moyens pour introduire au moins une partie de la part (27) liquéfiée lors de la condensation partielle (9) du courant de précurseur (20) provenant de la séparation de phases (21) sous forme de courant de retour dans la colonne hélium-néon (2).

14. Dispositif selon la revendication 13, **caractérisé par** un compresseur hélium-néon à plusieurs étages, dont le premier étage (16) est conçu pour l'exécution d'au moins une partie de la compression du courant de précurseur (15) à la première pression, dans lequel un autre étage (18) du compresseur hélium-néon à plusieurs étages est conçu de telle manière qu'au moins le courant de produit (22) est comprimé dans celui-ci à une deuxième pression.

15. Dispositif selon la revendication 13 ou 14, **caractérisé en ce que** le compresseur hélium-néon est réalisé sous la forme d'un compresseur à membrane et présente en particulier exactement deux étages (16, 18).

16. Dispositif selon l'une quelconque des revendications 13 à 15, **caractérisé par**
- des moyens pour réaliser la condensation partielle (9) du courant de précurseur (20) en échange de chaleur indirect (7) avec un premier courant d'agent de refroidissement liquide (31, 32), qui se vaporise lors de l'échange de chaleur indirect (7),
- des moyens pour condenser partiellement (3) la fraction de tête (4) sous la pression de fonctionnement de la colonne hélium-néon (2),
- des moyens pour extraire au moins une partie de la part de la fraction de tête (4) restée sous forme gazeuse lors de la condensation partielle sous forme de fraction riche en hélium et en néon (6),
- des moyens pour soumettre la fraction riche en hélium et en néon (6) à une autre condensation partielle (8),
- des moyens pour soutirer le courant de précurseur (13, 15) hors de la part restée sous forme gazeuse de la fraction riche en hélium et en néon (6),
- des moyens pour envoyer le courant de précurseur à la compression (16) à la première pression accrue,
- dans lequel les moyens pour la condensation partielle de la fraction riche en hélium et en néon et les moyens pour la condensation partielle du courant de précurseur sont formés par un condenseur hélium-néon (7), qui est réalisé sous forme de condenseur-évaporateur et présente une chambre d'évaporation (10), une première chambre de liquéfaction (8) et une deuxième chambre de liquéfaction (9), et par
- des moyens pour introduire la fraction riche en hélium et en néon (6) dans la première chambre de liquéfaction (8), pour introduire le courant de précurseur (20) dans la deuxième chambre de liquéfaction (9) et pour introduire le premier courant d'agent de refroidissement liquide (31, 32) dans la chambre d'évaporation (10) du condenseur hélium-néon (7).
